(19)

**Europäisches Patentamt**
**European Patent Office**
**Office européen des brevets**

(11) **EP 4 672 063 B1**

(12) **EUROPEAN PATENT SPECIFICATION**

(45) Date of publication and mention
of the grant of the patent:
**22.07.2026 Bulletin 2026/30**

(51) International Patent Classification (IPC):
***G06F 21/62*** *(2013.01)*

(52) Cooperative Patent Classification (CPC):
**G06F 21/6245**

(21) Application number: **25184430.4**

(22) Date of filing: **23.06.2025**

(54) **PRIVACY BUDGET ALLOCATION IN A DATA CLEAN ROOM**

PRIVATSPHÄRENBUDGETZUWEISUNG IN EINEM DATENREINIGUNGSRAUM

ATTRIBUTION DE BUDGET DE CONFIDENTIALITÉ DANS UNE SALLE DE NETTOYAGE DE DONNÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.06.2024 US 202418752144**

(43) Date of publication of application:
**31.12.2025 Bulletin 2026/01**

(73) Proprietor: **Google LLC**
**Mountain View, CA 94043 (US)**

(72) Inventors:
• **PESHNE, Anurag Narendra**
**Mountain View, CA, 94043 (US)**
• **JAMIL, Rafit Farhan**
**Mountain View, CA, 94043 (US)**
• **KRISHNASWAMY, Raja**
**Mountain View, CA, 94043 (US)**
• **INNAMURI, Praveen**
**Mountain View, CA, 94043 (US)**
• **SCHNEIDER, Scott**
**Mountain View, CA, 94043 (US)**
• **MASHUQ, Muntasir**
**Mountain View, CA, 94043 (US)**
• **STEPHEN, Alex Mittal,**
**Mountain View, CA, 94043 (US)**
• **GIANOLA, Magda**
**Seattle, WA, 98122 (US)**

(74) Representative: **Betten & Resch**
**Patent- und Rechtsanwälte PartGmbB**
**Maximiliansplatz 14**
**80333 München (DE)**

(56) References cited:
**US-A1- 2019 318 121    US-A1- 2021 256 151**

• **KELLY KOSTOPOULOU ET AL: "Turbo: Effective Caching in Differentially-Private Databases", ARXIV.ORG, CORNELL UNIVERSITY LIBRARY, 201 OLIN LIBRARY CORNELL UNIVERSITY ITHACA, NY 14853, 23 October 2023 (2023-10-23), XP091642311, DOI: 10.1145/3600006.3613174**

EP 4 672 063 B1

**Description**

**BACKGROUND**

The advent of computer networking and cloud computing has been marked by an increase in the sharing of electronic data. Often there is a desire to share data while maintaining privacy with respect to certain aspects of the data, such as personally identifiable information (PII), or information that can be used to distinguish or trace an individual's identity either directly or indirectly. One way to share data while enforcing desired privacy restrictions is through a data clean room. A data clean room is a secure, controlled environment in which multiple parties can securely share and analyze sensitive data with full control of how that data can be accessed.

Data clean rooms may employ differential privacy to protect sensitive data. Differential privacy is a mathematical framework that allows data to be analyzed without revealing sensitive information about the underlying data, the underlying data including, for example, the identities of individuals to which the data pertains. Differential privacy protects data by adding noise to numerical results; however, it is vulnerable to averaging attacks.

US 2019/318121 A1 discloses a differentially private system that receives client queries specifying a set of privacy parameters that determine a privacy spend for the query. The system executes the query only if there is sufficient privacy budget to accommodate the privacy spend.

US 2021/256151 A1 discloses a differentially private system that executes queries with adaptive differential privacy. Queries received from the client include a target accuracy and a maximum privacy spend for the query. The query is executed only if there is sufficient privacy budget to accommodate the privacy spend.

KELLY KOSTOPOULOU ET AL: "Turbo: Effective Caching in Differentially-Private Databases", ARXIV.ORG, CORNELL UNIVERSITY LIBRARY, 201 OLIN LIBRARY CORNELL UNIVERSITY ITHACA, NY 14853, 23 October 2023 (2023-10-23), XP091642311, DOI: 10.1145/3600006.3613174 discloses a differentially private database that provides a fixed, global differentially private guarantee. In order to increase the overall number of queries that can be answered accurately while maintaining the global DP guarantee, time-series databases may be partitioned temporally, such as on a week-by-week basis, with the privacy budget consumed by incoming queries assessed at the partition level.

**BRIEF** SUMMARY

In view of the desire to provide data clean rooms that employ differential privacy, and differential privacy's vulnerability to averaging attack, it has been recognized that there is a need for budgeting access to differentially private data. That is, it has been recognized that there is a need to restrict the number of allowed computations on a differentially private dataset, in view of the potential invasiveness of each query, to keep the total amount of information revealed within acceptable bounds, and thereby protect sensitive data. In view of the need for such "privacy budgeting," the presently disclosed technology was created.

In one aspect, the presently disclosed technology provides a method for restricting queries to a database according to a privacy budget including assigning a first privacy allowance to first data in a database table, the first privacy allowance being an amount of a privacy currency, and assigning a second privacy allowance to second data in the database table, the second data being added to the database table after the first data is present in the database table, the second privacy allowance being an amount of the privacy currency, and the database table being partitioned upon addition of the second data into a first partition including the first data and a second partition including the second data such that the first privacy allowance applies to the first partition and the second privacy allowance applies to the second partition; receiving a query from a database user, the query including a specified amount of the privacy currency, wherein servicing the query requires access to at least one subject partition, and the at least one subject partition includes at least one of the first partition or the second partition; comparing, for the at least one subject partition, on a partition-by-partition basis, at least a portion of the specified amount of privacy currency to a remaining privacy allowance for the subject partition; disallowing processing of the query when the comparing indicates that the at least a portion of the specified amount of privacy currency is greater than the remaining privacy allowance for the subject partition; and allowing processing of the query when the comparing indicates that for each of the at least one subject partition the at least a portion of the specified amount of privacy currency is equal to or less than the remaining privacy allowance for the subject partition.

In another aspect, the presently disclosed technology provides a processing system including a database having at least one database table; and one or more processors for implementing a privacy administration module to perform assigning a first privacy allowance to first data in the database table, the first privacy allowance being an amount of a privacy currency, and assigning a second privacy allowance to second data in the database table, the second data being added to the database table after the first data is present in the database table, the second privacy allowance being an amount of the privacy currency, and the database table being partitioned upon addition of the second data into a first partition including the first data and a second partition including the second data such that the first privacy allowance applies to the first partition and the second privacy allowance applies to the second partition; receiving a query from a database user, the query having a specified amount of the privacy currency, wherein servicing the query requires access to at least one subject partition, and the at least one subject partition includes at least one of the first partition or the second partition; comparing, for the at least one subject partition, on a partition-by-partition basis, at least a portion of the specified amount of privacy currency to a remaining privacy allowance for the subj ect partition; disallowing processing of the query when the comparing indicates that the at least a portion of the specified amount of privacy currency is greater than the remaining privacy allowance for the subject partition; and allowing processing of the query when the comparing indicates that for each of the at least one subject partition the at least a portion of the specified amount of privacy currency is equal to or less than the remaining privacy allowance for the subject partition.

BRIEF DESCRIPTION OF THE DRAWINGS

The accompanying drawings are not intended to be drawn to scale. Also, for purposes of clarity not every component may be labeled in every drawing. In the drawings:

> Fig. 1A shows a database table that is not clustered and not partitioned and that is used to illustrate privacy budgeting without partitioning.
> Fig. 1B shows the database table of Fig. 1A in a clustered form.
> Fig. 2 shows the database table of Figs. 1A and 1B in a partitioned form, the Fig. 2 form being used to illustrate privacy budgeting with partitioning.
> Fig. 3 is a diagram depicting processing flows used to describe differential privacy parameters that may be used in the presently disclosed technology.
> Fig. 4 is a block diagram of an illustrative system in which the presently disclosed technology may be used.
> Fig. 5 is a block diagram of a processing system that is one possible embodiment of the server of Fig. 4.
> Fig. 6 is a flow chart depicting the operations included in a process for restricting queries to a database according to an embodiment.

DETAILED DESCRIPTION

Examples of systems and methods are described herein. It should be understood that the words "example," "exemplary" and "illustrative" are used herein to mean "serving as an example, instance, or illustration." Any embodiment or feature described herein as being an "example," "exemplary" or "illustration" is not necessarily to be construed as preferred or advantageous over other embodiments or features. In the following description, reference is made to the accompanying figures, which form a part thereof. In the figures, similar symbols typically identify similar components, unless context dictates otherwise. Other embodiments may be utilized, and other changes may be made.

The example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

In one aspect, methods and systems for restricting queries to a database according to a privacy budget are disclosed. The technology includes assigning a first privacy allowance to first data in a database table, the first privacy allowance being an amount of a privacy currency, and assigning a second privacy allowance to second data in the database table; receiving a query from a database user, the query including a specified amount of the privacy currency; and allowing processing of the query only when, for each one of the first data and second data that must be accessed to service the query, the specified amount of privacy currency is equal to or less than a remaining privacy allowance for the data.

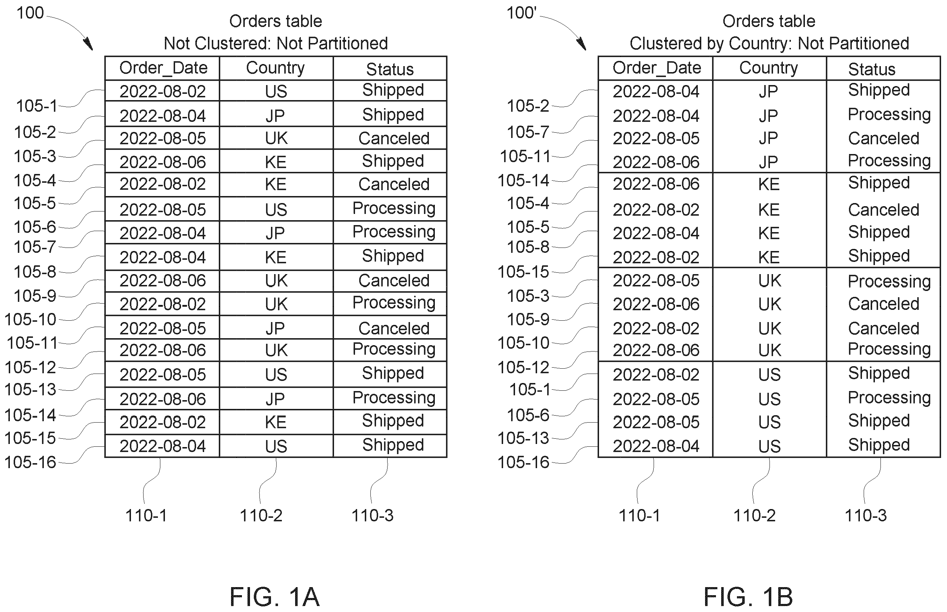

Fig. 1A shows a database table 100 to which the presently disclosed technology may be applied. The database table 100 is made up of data describing product orders, each product order corresponding to a record in the database table 100 such that the database table 100 includes records 105-1 to 105-16, collectively referred to as records 105. Each of records 105 has three attributes, order date, country, and status. The order date, country, and status attributes corresponding respectively to table columns 110-1, 110-2, and 110-3. In its Fig. 1A form, the database table 100 is not clustered and not partitioned.

Fig. 1B shows the database table 100 of Fig. 1A in a clustered form 100'. More specifically, in Fig. 1B the database table 100 is clustered by country and not partitioned.

In accordance with the principles of differential privacy, each time the database table 100 is queried, random noise is added to the data in the database table in a manner that endeavors to maintain the aggregate properties of the data while protecting the privacy of sensitive data. For example, if the data owner for the data of database table 100 is willing to allow queries of the database table 100 but seeks to protect as private the total number of orders from any given country, then a randomization algorithm may be employed to add "noise" of a uniform distribution to each entry in country column 110-2 each time the database table 100 is queried. After adding the noise, the countries indicated in the query response will likely be different from the actual countries and therefore one querying the database could not conclude the total number of orders from any one country based on a single query. However, by repeatedly querying the database table 100, one could determine the total number of orders from one or the countries. Such repeated querying is referred to as an averaging attack.

For example, in the case of a randomization algorithm being employed to add "noise" of a uniform distribution to each entry in the country column 110-2, one could still determine the total number of orders from the US by using an averaging attack. To do so one could query the database table 100 a number of times, e.g., 5 times, yielding a number of results for total orders from the US, e.g., 2, 5, 4, 3, 6, and then average the results to determine that the total number of orders from the US is 4. As can be appreciated, the accuracy of such averaging attacks improves as the number of queries is increased. As can be further appreciated, one can protect a database table against averaging attack by restricting the number of times the database table may be queried, and/or by increasing the amount of noise added by the randomization algorithm. In this regard, the term "privacy budgeting" will be used to refer to the act of ensuring a threshold level of differential privacy for data based on (i) the number of times the data is queried and/or (ii) the amount of noise added by a randomization algorithm each time the data is queried.

In an illustration of privacy budgeting, a restriction is placed on the number of times database table 100 may be queried. For instance, after all records with order dates 2022-08-02 to 2022-08-05 are present in the database table 100, the number of queries of the database table 100 is restricted to 10. However, if the database table 100 is queried 10 times before the records with order dates 2022-08-06 are added to the database table 100, the records with order dates 2022-08-06 add no utility to the database table 100 because no queries can be made after their addition. Accordingly, it is desirable to allow further queries after the addition of the records with order dates 2022-08-06, e.g., another 10 queries. But allowing the additional queries presents a problem. Allowing additional queries of the whole of database table 100 means that the total number of queries for the records having order dates from 2022-08-02 to 2022-08-05 is equal to the number of initial queries plus the number of added queries, thereby decreasing the averaging attack protection afforded to the for the records having order dates from 2022-08-02 to 2022-08-05. Further, while it is possible to separately account for queries accessing the records having order dates 2022-08-02 to 2022-08-05 and queries accessing the records having order dates of 2022-08-06 so as to implement distinct restrictions between the two groups of orders, such accounting is costly and difficult to implement.

To facilitate the application of number-of-query restrictions to data that is newly added to a database table, the database table may be partitioned so that the newly added data is included in a new partition and a new number-of-query restriction is applied to the new partition. For instance, database table 100 may be portioned by date such that each time new records are added to the database table 100, a dedicated number-of-query restriction may be readily applied to the newly added records.

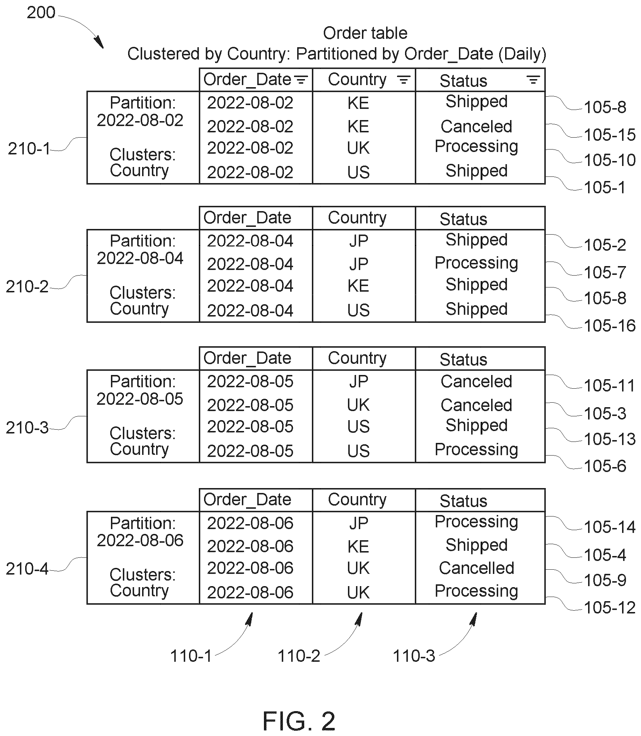

Referring to Fig. 2, the figure shows the database table 100 in a partitioned form 200 that facilitates applying a number-of-query restriction to the newly added data. More generally, the portioned form 200 of Fig. 2 facilitates the application of "privacy budgeting" to the database table 100. In addition, the partitioned form 200 is clustered, although clustering is an optional feature and is not required for the application of privacy budgeting according to the presently disclosed technology. As can be seen from Fig. 2, in the partitioned form 200 the database table 100 is partitioned by date of order. Thus, the partitioned form 200 includes a first partition 210-1 for order date 2022-08-02, a second partition 210-2 for order date 2022-08-04, a third partition 210-3 for order date 2022-08-05, and a fourth partition 210-4 for order date 2022-08-06, collectively referred to as partitions 210. Application of privacy budgeting to partitioned form 200 is facilitated by associating each of partitions 210 with its own privacy budget (e.g., number of permitted queries). For example, if partitions 210-1, 210-2, and 210-3 are present in the database table 100, and the number of queries for each of partitions 210-1, 210-2, and 210-3 is restricted to 10, and then the database table 100 is queried before the records with order date 2022-08-06 are added to the database table 100, the records with order dates 2022-0-06 can be added in a new partition, partition 210-4, and readily allocated a number-of-queries restriction apart from number-of-queries restrictions for the records in partitions 210-1, 210-2, and 210-3. In this manner, the utility of database table 100 can be maximized without sacrificing privacy protection for the records in partitions 210-1, 210-2, and 210-3.

In some embodiments, accesses to data in a database table or a database table partition may be restricted on the basis of the differential privacy parameter $\varepsilon$. A differential privacy scheme is said to be $\varepsilon$ differentially private when the following equation holds:

$$\mathrm{Pr}[M(x) \in S] / \mathrm{Pr}[M(y) \in S] \le e^{\hat{}}\varepsilon$$

where Pr denotes probability in the range of 0 to 1, x denotes the database table, y denotes a database table that differs from database table x by one record, M denotes a randomization algorithm, S denotes all subsets of the image of M, and e is Euler's number. In some embodiments, accesses to data in a database table or a database table partition may be restricted on the basis of the differential privacy parameter $\delta$. A differential privacy scheme is said to be $(\varepsilon, \delta)$ differentially private when the following equation holds:

$$\mathrm{Pr}[M(x) \in S] / \mathrm{Pr}[M(y) \in S] \le e^{\hat{}}\varepsilon + \delta$$

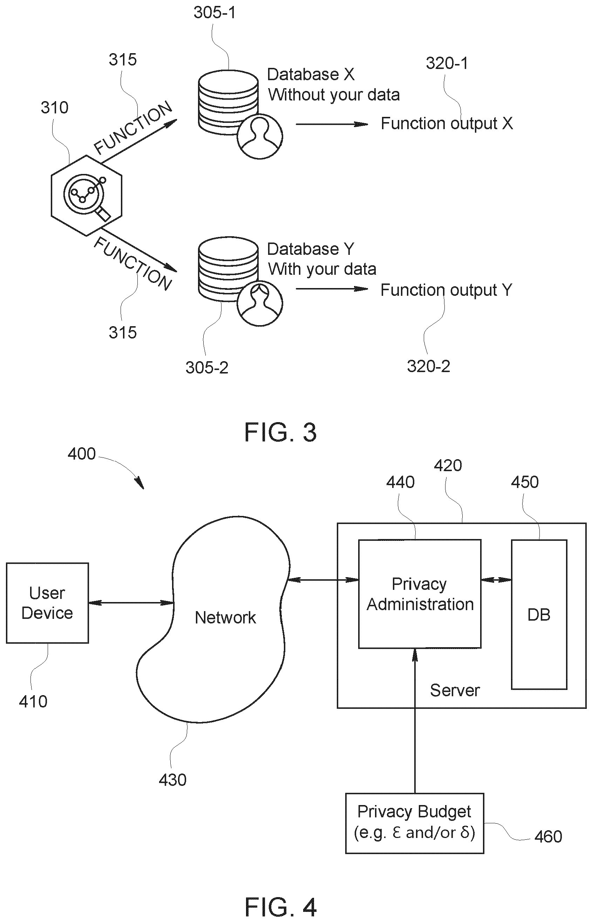

In some embodiments, accesses to data in a database table or a database table partition may be restricted on the basis of both the differential privacy parameter $\varepsilon$ and the differential privacy parameter $\delta$. Notably $\varepsilon$ and $\delta$ are related to the randomization algorithm M and, all other factors remaining the same, the values of $\varepsilon$ and $\delta$ decrease as the randomization algorithm provides greater randomization. For a qualitative description of $\varepsilon$ and $\delta$, reference is made to Fig. 3.

Fig. 3 is a diagram depicting processing flows used to describe the differential privacy parameters $\varepsilon$ and $\delta$. As can be seen from Fig. 3, two database tables are depicted, database table 305-1 and database table 305-2. The database tables 305-1 and 305-2 differ by one record. More specifically, database table 305-1 does not include a given individual's data, and database table 305-2 includes the given individual's data. When a user 310 performs a function 315 (e.g., a query) on each of database table 305-1 and database table 305-2, respective function results 320-1 and 320-2 are generated. The parameter $\varepsilon$ is an indicator of the difference between results 320-1 and 320-2. The smaller the difference (the smaller $\varepsilon$) the more differential privacy is afforded to the identity of the given user. Regarding $\delta$, $\delta$ denotes the likelihood of information being accidentally leaked from one or both of the database tables 305-1 and 305-2.

Fig. 4 is a block diagram of an illustrative system 400 in which the presently disclosed technology may be used with privacy budgeting via the $\varepsilon$ and/or $\delta$ parameters. As can be seen from Fig. 4, the system 400 may include a user device 410, a server 420, and a network 430. In an example of an embodiment, the user device 410 may take the form of a desktop computer, a laptop computer, a notebook computer, a tablet computer, a mobile phone, but is not limited to such forms. Further, network 430 may be the Internet, and server 420 may be a web server that services requests, such as data queries, made over the network 430 through user device 410. The server 420 includes a privacy administration module 440 for receiving queries received from the user device 410 via the network 430, and a database 450 communicatively coupled to the privacy administration module 440.

Regarding the user device 410 and server 420, it should be noted that each such element is not limited to a single device or a single location. That is, each such element may take the form of several devices, and those devices may or may not be geographically dispersed. Each of the elements is depicted as singular only for the sake of brevity of description and should not be limited to being embodied by a single device or at a single location. For example, server 420 may be implemented in the cloud, and as such, may be made up of software that runs on a multiple of platforms.

Regarding the database 450, it should be noted that the database 450 is used by way of example. Indeed, the database 450 may be external to the server 420, may be stored in a different server, may be stored in a different type of device, or may be stored in a combination of servers or devices. For example, the database 450 may be provided in one or more general purpose computers, personal computers, mobile devices such as a smartphone or a tablet, wearable devices such as watches or glasses, environmental sensors or controllers, or personal sensors such as sensors for health monitoring or alerting, cars or other vehicles such as self-driving cars or drones or other airborne vehicles. Further, the database 450 may be stored via a platform as a service, or via an infrastructure as a service.

In addition, it should be noted that network 430 is not limited to a single network and may include a multiple of interconnected networks. Moreover, some embodiments do not include a network. For example, the user device may be directly connected to the server 420.

Regarding the privacy administration module 440, the module may take the form of software, hardware, or a combination of software and hardware. One possible hardware embodiment is a field programmable gate array (FPGA). In any event, the privacy administration module 440 may manage access to the database 450 according to a privacy budget provided by an owner 460 of the data in the database 450. The database 450 may include one or more database tables, and the owner 460 may provide a privacy budget for the database 450 as a whole, to one or more database tables included in the database 450, to one or more partitions of a database table included in the database 450, or to one or more partitions for each of multiple of database tables included in the database 450. The privacy budget(s) provided by the data owner 460 may be in the form of an amount of $\varepsilon$, or an amount of $\delta$, or an amount of $\varepsilon$ and an amount of $\delta$. As such, $\varepsilon$ and $\delta$ may be defined as privacy currencies, and the amount(s) of $\varepsilon$ and $\delta$ provided by the data owner 460 may be defined as privacy allowances.

In an embodiment like that depicted in Fig. 4, a user of user device 410 may initiate a query of data contained in database 450. The query is transmitted over network 430 to server 440, where it is received by privacy administrator module 440. The query may include a user-specified $\varepsilon$ and/or a user-specified $\delta$, the user-specified $\varepsilon$ and/or a user-specified $\delta$ indicating a desired level of privacy protection and affecting the accuracy of the query results. That is, the greater the user-specified $\varepsilon$ and/or the user-specified $\delta$, the less noise will be added to the queried data, thereby affording more privacy protection to the queried data while providing for more accurate query results. As such, a user-specified $\varepsilon$ may be defined as a specified amount of a privacy currency, and a user-specified $\delta$ may be defined as a specified amount of another privacy currency.

The privacy administration module 440 assesses whether there is sufficient privacy budget to process the query according to the user's specifications. That is, when the query is received at the privacy administration module 440 the privacy administration module 440 begins an operation of comparing, for each partition of the database 450 that must be accessed to process the query, each specified amount of privacy currency (e.g., an amount of $\varepsilon$ and an amount of $\delta$) to the corresponding privacy allowance for the partition and if the comparison indicates that the specified amount of privacy currency is greater than the amount of privacy allowance, processing of the query is disallowed. However, if for each partition of the database 450 that must be accessed to process the query, each specified amount of privacy currency is less than or equal to the corresponding privacy allowance for the partition, processing of the query is permitted so that a query result is generated. Further, if the query is processed, then for each partition of the database 450 that is accessed to process the query, each specified amount of privacy currency is subtracted from the corresponding privacy allowance for the partition so as to generate a remaining privacy allowance. In this manner, when a query is processed a cost of the query equal to the user-specified amount is deducted from the privacy allowance, for each partition, and for each of the one or more privacy currencies employed. Thus, each of the one or more privacy allowances for each partition may be generally referred to as a remaining privacy allowance, with the corresponding initially allocated privacy allowance being a remaining privacy balance before any deduction.

It should be noted that while embodiments thus far described involve, for each privacy currency and each partition, checking the total of a user-specified amount of the privacy currency against a corresponding remaining privacy allowance, the presently disclosed technology is not limited to such embodiments. In some embodiments, less than the total of a user-specified amount of privacy currency is checked against the corresponding remaining privacy balance. For instance, a user-specified amount of privacy currency may be divided among the partitions to be accessed, either evenly or in some other fashion. Thus, for example, if a user query specifies an $\varepsilon$ amount of X, and two partitions need to be accessed to service the query, the privacy administrator may compare an $\varepsilon$ amount of X/2 to the remaining $\varepsilon$ balance for each partition to see if the query should be processed.

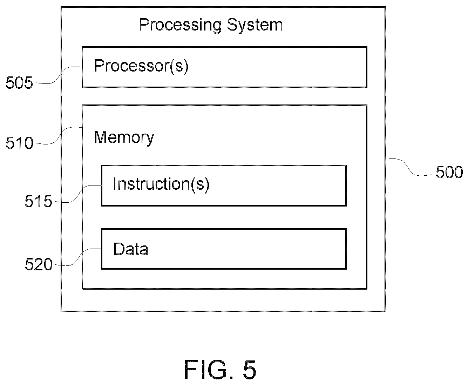

Turning now to Fig. 5, the figure is a block diagram of a processing system 500 that is one possible embodiment of the server 420 of Fig. 4. The processing system 500 may include one or more processors 505 and a memory 510 for storing instructions 515 and data 520. The instructions 515 and/or data 520 may cause the processing system 500 to perform the operations of the privacy administration module 440 and database 450 as discussed in connection with Fig. 4. In some embodiments, the processing system 500 may be a stand-alone computing device. In some other embodiments, the processing system 500 may be resident on a single computing device as one of a multiple of systems on the device, e.g., as a virtual machine on a device hosting a multiple of virtual machines; and thus, the privacy administration module 440 and/or database 450 may be resident on a single computing device as one of a multiple of systems on the device. In still other embodiments, the processing system 500 may be resident on a cloud computing system or other distributed system, in which case the processing system 500 may be distributed across two or more different physical devices;

and thus, the privacy administration module 440 and/or database 450 may be distributed across two or more different physical devices. Moreover, it should be noted that the processing system 500 is also one possible embodiment of the user device 410 of Fig. 4.

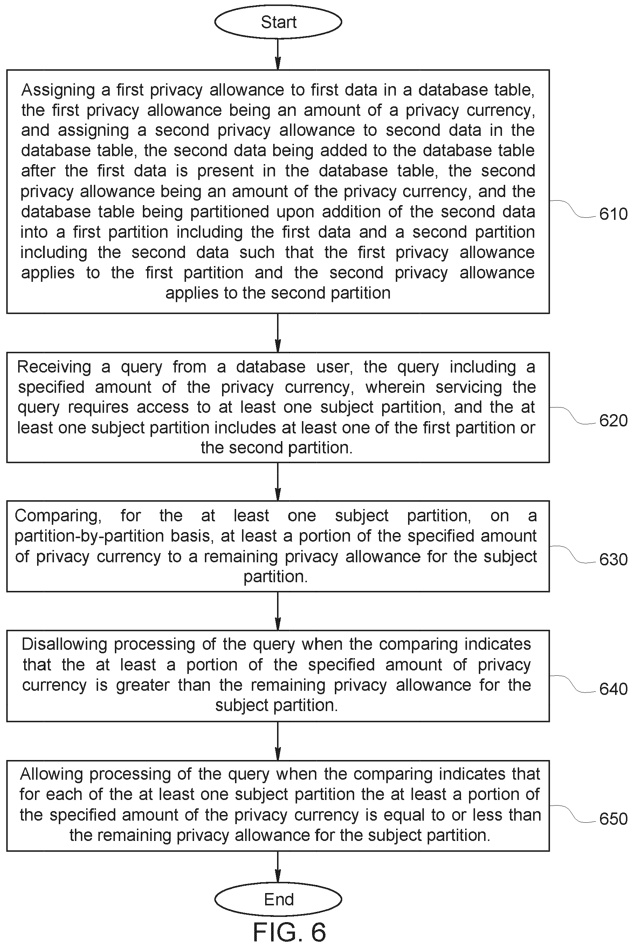

Referring now to Fig. 6, the figure is a flow chart depicting the operations included in a process for restricting queries to a database according to an embodiment. As can be seen from Fig. 6, an initial operation may be that of assigning a first privacy allowance to first data in a database table, the first privacy allowance being an amount of a privacy currency, and assigning a second privacy allowance to second data in the database table, the second data being added to the database table after the first data is present in the database table, the second privacy allowance being an amount of the privacy currency, and the database table being partitioned upon addition of the second data into a first partition including the first data and a second partition including the second data such that the first privacy allowance applies to the first partition and the second privacy allowance applies to the second partition (step 610). A next operation is that of receiving a query from a database user, the query including a specified amount of the privacy currency, wherein servicing the query requires access to at least one subject partition, and the at least one subject partition includes at least one of the first partition or the second partition (step 620). Next is an operation of comparing, for the at least one subject partition, on a partition-by-partition basis, at least a portion of the specified amount of privacy currency to a remaining privacy allowance for the subject partition (step 630). Then follows disallowing or allowing processing of the query. The disallowing operation is that of disallowing processing of the query when the comparing indicates that the at least a portion of the specified amount of privacy currency is greater than the remaining privacy allowance for the subject partition (step 640). And the allowing operation is that of allowing processing of the query when the comparing indicates that for each of the at least one subject partition the at least a portion of the specified amount of privacy currency is equal to or less than the remaining privacy allowance for the subject partition (step 650).

The presently disclosed technology may be implemented in the context of a data clean room. A data clean room product may be used by many customers. Each customer may act as a data provider and/or a data subscriber. When acting as a data provider, a customer attaches a privacy policy to some or all of the customer's data, and then gives certain other customers access to such data.

The privacy policy may create a differential privacy budget across all data subscribers or a separate budget for each data subscriber. In addition, the possible protection technologies that may be employed in the data clean room include differential privacy, aggregation thresholding, or a combination of differential privacy and aggregation thresholding. Aggregation thresholding is a form of protection that requires each row of output to be aggregated, with some minimum number of users per row.

When a data provider gives customers access to their policy-protected data, we call those customers "data subscribers." The data provider may choose the data subscribers to whom access is granted, or data subscribers may request access and be granted access manually or via some automatic policy. Thus, data providers can determine for themselves how much protection their data needs, what qualitative and/or quantitative protections their data needs, and which data subscribers can access their data subject to the protections applied.

In one possible embodiment of the present technology that is specific to data clean rooms, the database table (e.g., database table 200) is accessible through a data clean room. A data provider in the data clean room controls access to first data (e.g., data in partitions 210-1 to 210-3) and/or second data (e.g., data in partition 210-4), specifies a first privacy allowance for the first data and/or a second privacy allowance for the second data, and grants a data subscriber in the data clean room access to the first data and/or the second data.

Embodiments of the present technology include, but are not restricted to, the following.

(1) A method for restricting queries to a database according to a privacy budget including assigning a first privacy allowance to first data in a database table, the first privacy allowance being an amount of a privacy currency, and assigning a second privacy allowance to second data in the database table, the second data being added to the database table after the first data is present in the database table, the second privacy allowance being an amount of the privacy currency, and the database table being partitioned upon addition of the second data into a first partition including the first data and a second partition including the second data such that the first privacy allowance applies to the first partition and the second privacy allowance applies to the second partition; receiving a query from a database user, the query including a specified amount of the privacy currency, wherein servicing the query requires access to at least one subject partition, and the at least one subject partition includes at least one of the first partition or the second partition; comparing, for the at least one subject partition, on a partition-by-partition basis, at least a portion of the specified amount of privacy currency to a remaining privacy allowance for the subject partition; disallowing processing of the query when the comparing indicates that the at least a portion of the specified amount of privacy currency is greater than the remaining privacy allowance for the subject partition; and allowing processing of the query when the comparing indicates that for each of the at least one subject partition the at least a portion of the specified amount of privacy currency is equal to or less than the remaining privacy allowance for the subject partition.

(2) The method according to (1), wherein the privacy currency is $\varepsilon$, wherein $\varepsilon$ denotes a difference between results of the query on the database table and results of the query on a other database table, wherein the other database table differs from the database table by one database record.

(3) The method according to (2), wherein $\varepsilon$ is such that the following equation holds:
$Pr[M(x) \in S] / Pr[M(y) \in S] \le e^{\wedge}\varepsilon$, wherein Pr denotes probability in the range of 0 to 1, x denotes the database table, y denotes the other database table, M denotes a randomization algorithm, S denotes all subsets of the image of M, and e is Euler's number.

(4) The method according to (1), wherein the privacy currency is $\delta$, wherein $\delta$ denotes the likelihood of information from the database table being accidentally leaked.

(5) The method according to (4), wherein $\delta$ is such that the following equation holds:
$Pr[M(x) \in S] / Pr[M(y) \in S] \le e^{\wedge}\varepsilon + \delta$, wherein $\varepsilon$ denotes a difference between results of the query on the database table and results of the query on a other database table, wherein the other database table differs from the database table by one database record, Pr denotes probability in the range of 0 to 1, x denotes the database table, y denotes the other database table, M denotes a randomization algorithm, S denotes all subsets of the image of M, and e is Euler's number.

(6) The method according to (1), further including assigning a third privacy allowance to the first data in the database table, the third privacy allowance being an amount of other privacy currency, and assigning a fourth privacy allowance to the second data in the database table, the fourth privacy allowance being an amount of the other privacy currency, such that the third privacy allowance applies to the first partition and the fourth privacy allowance applies to the second partition, and wherein the query further includes a specified amount of the other privacy currency, the step of comparing further includes comparing, for the at least one subject partition, on a partition-by-partition basis, at least a portion of the specified amount of other privacy currency to a remaining other privacy allowance for the subject partition, the step of disallowing further includes disallowing processing of the query when the comparing indicates that the at least a portion of the specified amount of other privacy currency is greater than the remaining other privacy allowance for the subject partition, and the step of allowing includes allowing processing of the query when the comparing indicates that for each of the at least one subject partition the at least a portion of the specified amount of privacy currency is equal to or less than the remaining privacy allowance for subject partition and the at least a portion of the specified amount of other privacy currency is equal to or less than the remaining other privacy allowance for the subject partition.

(7) The method according to (6), wherein the privacy currency is $\varepsilon$, wherein $\varepsilon$ denotes a difference between results of the query on the database table and results of the query on a other database table, wherein the other database table differs from the database table by one database record; and wherein the other privacy currency is $\delta$, wherein $\delta$ denotes the likelihood of information from the database table being accidentally leaked.

(8) The method according to (7), wherein $\varepsilon$ and $\delta$ are such that the following equation holds:

$\Pr[M(x) \in S] / \Pr[M(y) \in S] \le e^{\wedge}\varepsilon$, wherein Pr denotes probability in the range of 0 to 1, x denotes the database table, y denotes the other database table, M denotes a randomization algorithm, S denotes all subsets of the image of M, and e is Euler's number.

(9) The method according to (1), wherein the database table is accessible through a data clean room, wherein a data provider in the data clean room controls access to at least one of the first data or the second data, and specifies at least one of the first privacy allowance or the second privacy allowance, and wherein the database user is a data subscriber in the data clean room that is granted access by the data provider to at least one of the first data or the second data.

(10) A processing system including a database having at least one database table; and one or more processors for implementing a privacy administration module to perform assigning a first privacy allowance to first data in the database table, the first privacy allowance being an amount of a privacy currency, and assigning a second privacy allowance to second data in the database table, the second data being added to the database table after the first data is present in the database table, the second privacy allowance being an amount of the privacy currency, and the database table being partitioned upon addition of the second data into a first partition including the first data and a second partition including the second data such that the first privacy allowance applies to the first partition and the second privacy allowance applies to the second partition; receiving a query from a database user, the query having a specified amount of the privacy currency, wherein servicing the query requires access to at least one subject partition, and the at least one subject partition includes at least one of the first partition or the second partition; comparing, for the at least one subject partition, on a partition-by-partition basis, at least a portion of the specified amount of privacy currency to a remaining privacy allowance for the subject partition; disallowing processing of the query when the comparing indicates that the at least a portion of the specified amount of privacy currency is greater than the remaining privacy allowance for the subject partition; and allowing processing of the query when the comparing indicates that for each of the at least one subject partition the at least a portion of the specified amount of privacy currency is equal to or less than the remaining privacy allowance for the subject partition.

(11) The system according to (10), wherein the database and the privacy administration module are included within a single device.

(12) The system according to (10), wherein the first privacy allowance and the second privacy allowance are provided by an owner of the first data and the second data.

(13) The system according to (10), wherein the database table is accessible through a data clean room, wherein a data provider in the data clean room controls access to at least one of the first data or the second data, and specifies at least one of the first privacy allowance or the second privacy allowance, and wherein the database user is a data subscriber in the data clean room that is granted access by the data provider to at least one of the first data or the second data.

(14) The system according to (10), wherein the privacy currency is $\varepsilon$, wherein $\varepsilon$ denotes a difference between results of the query on the database table and results of the query on a other database table, wherein the other database table differs from the database table by one database record.

(15) The system according to (14), wherein $\varepsilon$ is such that the following equation holds:

$\Pr[M(x) \in S] / \Pr[M(y) \in S] \le e^{\wedge}\varepsilon$, wherein Pr denotes probability in the range of 0 to 1, x denotes the database table, y denotes the other database table, M denotes a randomization algorithm, S denotes all subsets of the image of M, and e is Euler's number.

(16) The system according to (10), wherein the privacy currency is $\delta$, wherein $\delta$ denotes the likelihood of information from the database table being accidentally leaked.

(17) The system according to claim 16, wherein $\delta$ is such that the following equation holds:

$\Pr[M(x) \in S] / \Pr[M(y) \in S] \le e^{\wedge}\varepsilon + \delta$, wherein $\varepsilon$ denotes a difference between results of the query on the database table and results of the query on a other database table, wherein the other database table differs from the database table by one database record, Pr denotes probability in the range of 0 to 1, x denotes the database table, y denotes the other database table, M denotes a randomization algorithm, S denotes all subsets of the image of M, and e is Euler's number.

(18) The system according to (10), wherein the privacy administration module further performs assigning a third privacy allowance to the first data in the database table, the third privacy allowance being an amount of other privacy currency, and assigning a fourth privacy allowance to the second data in the database table, the fourth privacy allowance being an amount of the other privacy currency, such that the third privacy allowance applies to the first partition and the fourth privacy allowance applies to the second partition, and wherein the query further includes a specified amount of the other privacy currency, the step of comparing further includes comparing, for the at least one subject partition, on a partition-by-partition basis, at least a portion of the specified amount of other privacy currency to a remaining other privacy allowance for the subject partition, the step of disallowing further includes disallowing processing of the query when the comparing indicates that the at least a portion of the specified amount of other privacy currency is greater than the remaining other privacy allowance for the subject partition, and the step of allowing includes allowing processing of the query when the comparing indicates that for each of the at least one subject partition the at least a portion of the specified amount of privacy currency is equal to or less than the remaining privacy allowance for subject partition and the at least a portion of the specified amount of other privacy currency is equal to or less than the remaining other privacy allowance for the subject partition.
(19) The system according to (18), wherein the privacy currency is $\varepsilon$, wherein $\varepsilon$ denotes a difference between results of the query on the database table and results of the query on a other database table, wherein the other database table differs from the database table by one database record; and wherein the other privacy currency is $\delta$, wherein $\delta$ denotes the likelihood of information from the database table being accidentally leaked.
(20) The system according to (19), wherein $\varepsilon$ and $\delta$ are such that the following equation holds: $Pr[M(x) \in S] / Pr[M(y) \in S] \leq e^{\wedge}\varepsilon$, wherein Pr denotes probability in the range of 0 to 1, x denotes the database table, y denotes the other database table, M denotes a randomization algorithm, S denotes all subsets of the image of M, and e is Euler's number.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims.

**Claims**

1. A method for restricting queries to a database according to a privacy budget comprising:

   assigning a first privacy allowance to first data in a database table, the first privacy allowance being an amount of a privacy currency, and assigning a second privacy allowance to second data in the database table, the second data being added to the database table after the first data is present in the database table, the second privacy allowance being an amount of the privacy currency, and the database table being partitioned upon addition of the second data into a first partition including the first data and a second partition including the second data such that the first privacy allowance applies to the first partition and the second privacy allowance applies to the second partition;
   receiving a query from a database user, the query comprising a specified amount of the privacy currency, wherein servicing the query requires access to at least one subject partition, and the at least one subject partition comprises at least one of the first partition or the second partition;
   comparing, for the at least one subject partition, on a partition-by-partition basis, at least a portion of the specified amount of privacy currency to a remaining privacy allowance for the subject partition;
   disallowing processing of the query when the comparing indicates that the at least a portion of the specified amount of privacy currency is greater than the remaining privacy allowance for the subject partition; and
   allowing processing of the query when the comparing indicates that for each of the at least one subject partition the at least a portion of the specified amount of privacy currency is equal to or less than the remaining privacy allowance for the subject partition.

2. The method according to claim 1, wherein the privacy currency is $\varepsilon$, wherein $\varepsilon$ denotes a difference between results of the query on the database table and results of the query on another database table, wherein the other database table differs from the database table by one database record.

3. The method according to claim 2, wherein $\varepsilon$ is such that the following equation holds: $Pr[M(x) \in S] / Pr[M(y) \in S] \leq e^{\wedge}\varepsilon$, wherein Pr denotes probability in the range of 0 to 1, x denotes the database table, y denotes the other database table, M denotes a randomization algorithm, S denotes all subsets of the image of M, and e is Euler's number.

4. The method according to claim 1, wherein the privacy currency is $\delta$, wherein $\delta$ denotes the likelihood of information from the database table being accidentally leaked.

5. The method according to claim 4, wherein δ is such that the following equation holds: Pr[M(x) ∈ S] / Pr[M(y) ∈ S] ≤ e^ε + δ, wherein ε denotes a difference between results of the query on the database table and results of the query on another database table, wherein the other database table differs from the database table by one database record, Pr denotes probability in the range of 0 to 1, x denotes the database table, y denotes the other database table, M denotes a randomization algorithm, S denotes all subsets of the image of M, and e is Euler's number.

6. The method according to claim 1, further comprising:

   assigning a third privacy allowance to the first data in the database table, the third privacy allowance being an amount of another privacy currency, and assigning a fourth privacy allowance to the second data in the database table, the fourth privacy allowance being an amount of the other privacy currency, such that the third privacy allowance applies to the first partition and the fourth privacy allowance applies to the second partition, and wherein

   the query further comprises a specified amount of the other privacy currency,
   the step of comparing further comprises comparing, for the at least one subject partition, on a partition-by-partition basis, at least a portion of the specified amount of other privacy currency to a remaining other privacy allowance for the subject partition,
   the step of disallowing further comprises disallowing processing of the query when the comparing indicates that the at least a portion of the specified amount of other privacy currency is greater than the remaining other privacy allowance for the subject partition, and
   the step of allowing comprises allowing processing of the query when the comparing indicates that for each of the at least one subject partition the at least a portion of the specified amount of privacy currency is equal to or less than the remaining privacy allowance for the subject partition and the at least a portion of the specified amount of other privacy currency is equal to or less than the remaining other privacy allowance for the subject partition.

7. The method according to claim 6,

   wherein the privacy currency is ε, wherein ε denotes a difference between results of the query on the database table and results of the query on another database table, wherein the other database table differs from the database table by one database record; and
   wherein the other privacy currency is δ, wherein δ denotes the likelihood of information from the database table being accidentally leaked;
   optionally wherein ε and δ are such that the following equation holds: Pr[M(x) ∈ S] / Pr[M(y) ∈ S] ≤ e^ε, wherein Pr denotes probability in the range of 0 to 1, x denotes the database table, y denotes the other database table, M denotes a randomization algorithm, S denotes all subsets of the image of M, and e is Euler's number.

8. The method according to one of claims 1 to 7,

   wherein the database table is accessible through a data clean room,
   wherein a data provider in the data clean room controls access to at least one of the first data or the second data, and specifies at least one of the first privacy allowance or the second privacy allowance, and
   wherein the database user is a data subscriber in the data clean room that is granted access by the data provider to at least one of the first data or the second data.

9. A processing system comprising:

   a database comprising at least one database table; and
   one or more processors for implementing a privacy administration module to perform

      assigning a first privacy allowance to first data in the database table, the first privacy allowance being an amount of a privacy currency, and assigning a second privacy allowance to second data in the database table, the second data being added to the database table after the first data is present in the database table, the second privacy allowance being an amount of the privacy currency, and the database table being partitioned upon addition of the second data into a first partition including the first data and a second partition including the second data such that the first privacy allowance applies to the first partition and the second privacy allowance applies to the second partition;
      receiving a query from a database user, the query comprising a specified amount of the privacy currency, wherein servicing the query requires access to at least one subject partition, and the at least one subject partition comprises at least one of the first partition or the second partition;

comparing, for the at least one subject partition, on a partition-by-partition basis, at least a portion of the specified amount of privacy currency to a remaining privacy allowance for the subject partition;

disallowing processing of the query when the comparing indicates that the at least a portion of the specified amount of privacy currency is greater than the remaining privacy allowance for the subject partition; and

allowing processing of the query when the comparing indicates that for each of the at least one subject partition the at least a portion of the specified amount of privacy currency is equal to or less than the remaining privacy allowance for the subject partition.

10. The system according to claim 9,

wherein the database and the privacy administration module are included within a single device; and/or

wherein the first privacy allowance and the second privacy allowance are provided by an owner of the first data and the second data.

11. The system according to claim 9 or 10,

wherein the database table is accessible through a data clean room,

wherein a data provider in the data clean room controls access to at least one of the first data or the second data, and specifies at least one of the first privacy allowance or the second privacy allowance, and

wherein the database user is a data subscriber in the data clean room that is granted access by the data provider to at least one of the first data or the second data.

12. The system according to claim 9,

wherein the privacy currency is $\varepsilon$, wherein $\varepsilon$ denotes a difference between results of the query on the database table and results of the query on another database table, wherein the other database table differs from the database table by one database record;

optionally wherein $\varepsilon$ is such that the following equation holds: $Pr[M(x) \in S] / Pr[M(y) \in S] \leq e^{\wedge}\varepsilon$, wherein Pr denotes probability in the range of 0 to 1, x denotes the database table, y denotes the other database table, M denotes a randomization algorithm, S denotes all subsets of the image of M, and e is Euler's number.

13. The system according to claim 9,

wherein the privacy currency is $\delta$, wherein $\delta$ denotes the likelihood of information from the database table being accidentally leaked, optionally wherein $\delta$ is such that the following equation holds: $Pr[M(x) \in S] / Pr[M(y) \in S] \leq e^{\wedge}\varepsilon + \delta$, wherein $\varepsilon$ denotes a difference between results of the query on the database table and results of the query on another database table, wherein the other database table differs from the database table by one database record, Pr denotes probability in the range of 0 to 1, x denotes the database table, y denotes the other database table, M denotes a randomization algorithm, S denotes all subsets of the image of M, and e is Euler's number.

14. The system according to claim 9, wherein the privacy administration module further performs:

assigning a third privacy allowance to the first data in the database table, the third privacy allowance being an amount of another privacy currency, and assigning a fourth privacy allowance to the second data in the database table, the fourth privacy allowance being an amount of the other privacy currency, such that the third privacy allowance applies to the first partition and the fourth privacy allowance applies to the second partition, and

wherein

the query further comprises a specified amount of the other privacy currency,

the step of comparing further comprises comparing, for the at least one subject partition, on a partition-by-partition basis, at least a portion of the specified amount of other privacy currency to a remaining other privacy allowance for the subject partition,

the step of disallowing further comprises disallowing processing of the query when the comparing indicates that the at least a portion of the specified amount of other privacy currency is greater than the remaining other privacy allowance for the subject partition, and

the step of allowing comprises allowing processing of the query when the comparing indicates that for each of the at least one subject partition the at least a portion of the specified amount of privacy currency is equal to or less than the remaining privacy allowance for the subject partition and the at least a portion of the specified amount of other privacy currency is equal to or less than the remaining other privacy allowance for the subject partition.

15. The system according to claim 14,

wherein the privacy currency is ε, wherein ε denotes a difference between results of the query on the database table and results of the query on another database table, wherein the other database table differs from the database table by one database record; and
wherein the other privacy currency is δ, wherein δ denotes the likelihood of information from the database table being accidentally leaked;
optionally wherein ε and δ are such that the following equation holds: $Pr[M(x) \in S] / Pr[M(y) \in S] \leq e^{\wedge}\varepsilon$, wherein Pr denotes probability in the range of 0 to 1, x denotes the database table, y denotes the other database table, M denotes a randomization algorithm, S denotes all subsets of the image of M, and e is Euler's number.

**Patentansprüche**

1. Verfahren zum Beschränken von Abfragen an eine Datenbank gemäß einem Privatsphärenbudget, umfassend:

Zuweisen einer ersten Privatsphärenzuteilung zu ersten Daten in einer Datenbanktabelle, wobei die erste Privatsphärenzuteilung eine Menge einer Privatsphärenwährung ist, und Zuweisen einer zweiten Privatsphärenzuteilung zu zweiten Daten in der Datenbanktabelle, wobei die zweiten Daten zu der Datenbanktabelle hinzugefügt werden, nachdem die ersten Daten in der Datenbanktabelle vorhanden sind, wobei die zweite Privatsphärenzuteilung eine Menge der Privatsphärenwährung ist, und die Datenbanktabelle bei Hinzufügen der zweiten Daten in eine erste Partition, die die ersten Daten einschließt, und eine zweite Partition, die die zweiten Daten einschließt, partitioniert wird, sodass die erste Privatsphärenzuteilung für die erste Partition gilt und die zweite Privatsphärenzuteilung für die zweite Partition gilt;
Empfangen einer Abfrage von einem Datenbankbenutzer, wobei die Abfrage eine spezifizierte Menge der Privatsphärenwährung umfasst, wobei das Bedienen der Abfrage Zugriff auf mindestens eine Subjektpartition erfordert und die mindestens eine Subjektpartition mindestens eine von der ersten Partition oder der zweiten Partition umfasst;
Vergleichen, für die mindestens eine Subjektpartition, auf einer partitionsweisen Basis, mindestens eines Abschnitts der spezifizierten Menge an Privatsphärenwährung mit einer verbleibenden Privatsphärenzuteilung für die Subjektpartition;
Unterbinden einer Verarbeitung der Abfrage, wenn das Vergleichen angibt, dass der mindestens eine Abschnitt der spezifizierten Menge an Privatsphärenwährung größer als die verbleibende Privatsphärenzuteilung für die Subjektpartition ist; und
Zulassen einer Verarbeitung der Abfrage, wenn das Vergleichen angibt, dass für jede der mindestens einen Subjektpartition der mindestens eine Abschnitt der spezifizierten Menge an Privatsphärenwährung gleich oder kleiner als die verbleibende Privatsphärenzuteilung für die Subjektpartition ist.

2. Verfahren nach Anspruch 1, wobei die Privatsphärenwährung ε ist, wobei ε eine Differenz zwischen Ergebnissen der Abfrage an die Datenbanktabelle und Ergebnissen der Abfrage an eine andere Datenbanktabelle bezeichnet, wobei sich die andere Datenbanktabelle von der Datenbanktabelle durch einen Datenbankdatensatz unterscheidet.

3. Verfahren nach Anspruch 2, wobei ε derart ist, dass die folgende Gleichung gilt:
$Pr[M(x) \in S] / Pr[M(y) \in S] \leq e^{\wedge}\varepsilon$, wobei Pr Wahrscheinlichkeit im Bereich von 0 bis 1 bezeichnet, x die Datenbanktabelle bezeichnet, y die andere Datenbanktabelle bezeichnet, M einen Randomisierungsalgorithmus bezeichnet, S alle Teilmengen des Bildes von M bezeichnet und e die Eulersche Zahl ist.

4. Verfahren nach Anspruch 1, wobei die Privatsphärenwährung δ ist, wobei δ die Wahrscheinlichkeit bezeichnet, dass Informationen aus der Datenbanktabelle versehentlich durchsickern.

5. Verfahren nach Anspruch 4, wobei δ derart ist, dass die folgende Gleichung gilt:
$Pr[M(x) \in S] / Pr[M(y) \in S] \leq e^{\wedge}\varepsilon + \delta$, wobei ε eine Differenz zwischen Ergebnissen der Abfrage an die Datenbanktabelle und Ergebnissen der Abfrage an eine andere Datenbanktabelle bezeichnet, wobei sich die andere Datenbanktabelle von der Datenbanktabelle durch einen Datenbankdatensatz unterscheidet, wobei Pr Wahrscheinlichkeit im Bereich von 0 bis 1 bezeichnet, x die Datenbanktabelle bezeichnet, y die andere Datenbanktabelle bezeichnet, M einen Randomisierungsalgorithmus bezeichnet, S alle Teilmengen des Bildes von M bezeichnet und e die Eulersche Zahl ist.

6. Verfahren nach Anspruch 1, ferner umfassend:

Zuweisen einer dritten Privatsphärenzuteilung zu den ersten Daten in der Datenbanktabelle, wobei die dritte Privatsphärenzuteilung eine Menge einer anderen Privatsphärenwährung ist, und Zuweisen einer vierten Privatsphärenzuteilung zu den zweiten Daten in der Datenbanktabelle, wobei die vierte Privatsphärenzuteilung eine Menge der anderen Privatsphärenwährung ist, sodass die dritte Privatsphärenzuteilung für die erste Partition gilt und die vierte Privatsphärenzuteilung für die zweite Partition gilt, und

wobei

die Abfrage ferner eine spezifizierte Menge der anderen Privatsphärenwährung umfasst, der Schritt des Vergleichens ferner ein Vergleichen, für die mindestens eine Subjektpartition, auf einer partitionsweisen Basis, mindestens eines Abschnitts der spezifizierten Menge an anderer Privatsphärenwährung mit einer verbleibenden anderen Privatsphärenzuteilung für die Subjektpartition umfasst, der Schritt des Unterbindens ferner ein Unterbinden einer Verarbeitung der Abfrage umfasst, wenn das Vergleichen angibt, dass der mindestens eine Abschnitt der spezifizierten Menge an anderer Privatsphärenwährung größer als die verbleibende andere Privatsphärenzuteilung für die Subjektpartition ist, und der Schritt des Zulassens ein Zulassen einer Verarbeitung der Abfrage umfasst, wenn das Vergleichen angibt, dass für jede der mindestens einen Subjektpartition der mindestens eine Abschnitt der spezifizierten Menge an Privatsphärenwährung gleich oder kleiner als die verbleibende Privatsphärenzuteilung für die Subjektpartition ist und der mindestens eine Abschnitt der spezifizierten Menge an anderer Privatsphärenwährung gleich oder kleiner als die verbleibende andere Privatsphärenzuteilung für die Subjektpartition ist.

7. Verfahren nach Anspruch 6,

wobei die Privatsphärenwährung ε ist, wobei ε eine Differenz zwischen Ergebnissen der Abfrage an die Datenbanktabelle und Ergebnissen der Abfrage an eine andere Datenbanktabelle bezeichnet, wobei sich die andere Datenbanktabelle von der Datenbanktabelle durch einen Datenbankdatensatz unterscheidet; und wobei die andere Privatsphärenwährung δ ist, wobei δ die Wahrscheinlichkeit bezeichnet, dass Informationen aus der Datenbanktabelle versehentlich durchsickern; wobei optional ε und δ derart sind, dass die folgende Gleichung gilt: Pr[M(x) ∈ S] / Pr[M(y) ∈ S] ≤ e^ε, wobei Pr Wahrscheinlichkeit im Bereich von 0 bis 1 bezeichnet, x die Datenbanktabelle bezeichnet, y die andere Datenbanktabelle bezeichnet, M einen Randomisierungsalgorithmus bezeichnet, S alle Teilmengen des Bildes von M bezeichnet und e die Eulersche Zahl ist.

8. Verfahren nach einem der Ansprüche 1 bis 7,

wobei die Datenbanktabelle durch einen Datenreinigungsraum zugänglich ist, wobei ein Datenanbieter in dem Datenreinigungsraum Zugriff auf mindestens eines der ersten Daten oder der zweiten Daten steuert und mindestens eine der ersten Privatsphärenzuteilung oder der zweiten Privatsphärenzuteilung spezifiziert, und wobei der Datenbankbenutzer ein Datenabonnent in dem Datenreinigungsraum ist, dem durch den Datenanbieter Zugriff auf mindestens eines der ersten Daten oder der zweiten Daten gewährt wird.

9. Verarbeitungssystem, umfassend:

eine Datenbank, umfassend mindestens eine Datenbanktabelle; und einen oder mehrere Prozessoren zum Implementieren eines Privatsphärenverwaltungsmoduls zum Durchführen von:

Zuweisen einer ersten Privatsphärenzuteilung zu ersten Daten in der Datenbanktabelle, wobei die erste Privatsphärenzuteilung eine Menge einer Privatsphärenwährung ist, und Zuweisen einer zweiten Privatsphärenzuteilung zu zweiten Daten in der Datenbanktabelle, wobei die zweiten Daten zu der Datenbanktabelle hinzugefügt werden, nachdem die ersten Daten in der Datenbanktabelle vorhanden sind, wobei die zweite Privatsphärenzuteilung eine Menge der Privatsphärenwährung ist, und die Datenbanktabelle bei Hinzufügen der zweiten Daten in eine erste Partition, die die ersten Daten einschließt, und eine zweite Partition, die die zweiten Daten einschließt, partitioniert wird, sodass die erste Privatsphärenzuteilung für die erste Partition gilt und die zweite Privatsphärenzuteilung für die zweite Partition gilt; Empfangen einer Abfrage von einem Datenbankbenutzer, wobei die Abfrage eine spezifizierte Menge der Privatsphärenwährung umfasst, wobei das Bedienen der Abfrage Zugriff auf mindestens eine Subjektpartition erfordert und die mindestens eine Subjektpartition mindestens eine von der ersten Partition oder der zweiten Partition umfasst; Vergleichen, für die mindestens eine Subjektpartition, auf einer partitionsweisen Basis, mindestens eines Abschnitts der spezifizierten Menge an Privatsphärenwährung mit einer verbleibenden Privatsphärenzuteilung für die Subjektpartition;

Unterbinden einer Verarbeitung der Abfrage, wenn das Vergleichen angibt, dass der mindestens eine Abschnitt der spezifizierten Menge an Privatsphärenwährung größer als die verbleibende Privatsphärenzuteilung für die Subjektpartition ist; und

Zulassen einer Verarbeitung der Abfrage, wenn das Vergleichen angibt, dass für jede der mindestens einen Subjektpartition der mindestens eine Abschnitt der spezifizierten Menge an Privatsphärenwährung gleich oder kleiner als die verbleibende Privatsphärenzuteilung für die Subjektpartition ist.

10. System nach Anspruch 9,

wobei die Datenbank und das Privatsphärenverwaltungsmodul innerhalb einer einzelnen Vorrichtung eingeschlossen sind; und/oder wobei die erste Privatsphärenzuteilung und die zweite Privatsphärenzuteilung durch einen Eigentümer der ersten Daten und der zweiten Daten bereitgestellt sind.

11. System nach Anspruch 9 oder 10,

wobei die Datenbanktabelle durch einen Datenreinigungsraum zugänglich ist,

wobei ein Datenanbieter in dem Datenreinigungsraum Zugriff auf mindestens eines der ersten Daten oder der zweiten Daten steuert und mindestens eine der ersten Privatsphärenzuteilung oder der zweiten Privatsphärenzuteilung spezifiziert, und

wobei der Datenbankbenutzer ein Datenabonnent in dem Datenreinigungsraum ist, dem durch den Datenanbieter Zugriff auf mindestens eines der ersten Daten oder der zweiten Daten gewährt wird.

12. System nach Anspruch 9,

wobei die Privatsphärenwährung $\varepsilon$ ist, wobei $\varepsilon$ eine Differenz zwischen Ergebnissen der Abfrage an die Datenbanktabelle und Ergebnissen der Abfrage an eine andere Datenbanktabelle bezeichnet, wobei sich die andere Datenbanktabelle von der Datenbanktabelle durch einen Datenbankdatensatz unterscheidet; wobei optional $\varepsilon$ derart ist, dass die folgende Gleichung gilt:

$Pr[M(x) \in S] / Pr[M(y) \in S] \le e^\varepsilon$, wobei Pr Wahrscheinlichkeit im Bereich von 0 bis 1 bezeichnet, x die Datenbanktabelle bezeichnet, y die andere Datenbanktabelle bezeichnet, M einen Randomisierungsalgorithmus bezeichnet, S alle Teilmengen des Bildes von M bezeichnet und e die Eulersche Zahl ist.

13. System nach Anspruch 9,

wobei die Privatsphärenwährung $\delta$ ist, wobei $\delta$ die Wahrscheinlichkeit bezeichnet, dass Informationen aus der Datenbanktabelle versehentlich durchsickern,

wobei optional $\delta$ derart ist, dass die folgende Gleichung gilt:

$Pr[M(x) \in S] / Pr[M(y) \in S] \le e^\varepsilon + \delta$, wobei $\varepsilon$ eine Differenz zwischen Ergebnissen der Abfrage an die Datenbanktabelle und Ergebnissen der Abfrage an eine andere Datenbanktabelle bezeichnet, wobei sich die andere Datenbanktabelle von der Datenbanktabelle durch einen Datenbankdatensatz unterscheidet, wobei Pr Wahrscheinlichkeit im Bereich von 0 bis 1 bezeichnet, x die Datenbanktabelle bezeichnet, y die andere Datenbanktabelle bezeichnet, M einen Randomisierungsalgorithmus bezeichnet, S alle Teilmengen des Bildes von M bezeichnet und e die Eulersche Zahl ist.

14. System nach Anspruch 9, wobei das Privatsphärenverwaltungsmodul ferner Folgendes durchführt:

Zuweisen einer dritten Privatsphärenzuteilung zu den ersten Daten in der Datenbanktabelle, wobei die dritte Privatsphärenzuteilung eine Menge einer anderen Privatsphärenwährung ist, und Zuweisen einer vierten Privatsphärenzuteilung zu den zweiten Daten in der Datenbanktabelle, wobei die vierte Privatsphärenzuteilung eine Menge der anderen Privatsphärenwährung ist, sodass die dritte Privatsphärenzuteilung für die erste Partition gilt und die vierte Privatsphärenzuteilung für die zweite Partition gilt, und

wobei

die Abfrage ferner eine spezifizierte Menge der anderen Privatsphärenwährung umfasst,

der Schritt des Vergleichens ferner ein Vergleichen, für die mindestens eine Subjektpartition, auf einer partitionsweisen Basis, mindestens eines Abschnitts der spezifizierten Menge an anderer Privatsphärenwährung mit einer verbleibenden anderen Privatsphärenzuteilung für die Subjektpartition umfasst,

der Schritt des Unterbindens ferner ein Unterbinden einer Verarbeitung der Abfrage umfasst, wenn das Vergleichen angibt, dass der mindestens eine Abschnitt der spezifizierten Menge an anderer Privatsphärenwährung größer als die verbleibende andere Privatsphärenzuteilung für die Subjektpartition ist, und

der Schritt des Zulassens ein Zulassen einer Verarbeitung der Abfrage umfasst, wenn das Vergleichen angibt, dass für jede der mindestens einen Subjektpartition der mindestens eine Abschnitt der spezifizierten Menge an Privatsphärenwährung gleich oder kleiner als die verbleibende Privatsphärenzuteilung für die Subjektpartition ist und der mindestens eine Abschnitt der spezifizierten Menge an anderer Privatsphärenwährung gleich oder kleiner als die verbleibende andere Privatsphärenzuteilung für die Subjektpartition ist.

15. System nach Anspruch 14,

wobei die Privatsphärenwährung ε ist, wobei ε eine Differenz zwischen Ergebnissen der Abfrage an die Datenbanktabelle und Ergebnissen der Abfrage an eine andere Datenbanktabelle bezeichnet, wobei sich die andere Datenbanktabelle von der Datenbanktabelle durch einen Datenbankdatensatz unterscheidet; und
wobei die andere Privatsphärenwährung δ ist, wobei δ die Wahrscheinlichkeit bezeichnet, dass Informationen aus der Datenbanktabelle versehentlich durchsickern;

wobei optional ε und δ derart sind, dass die folgende Gleichung gilt:
$\Pr[M(x) \in S] / \Pr[M(y) \in S] \le e^\wedge\varepsilon$, wobei Pr Wahrscheinlichkeit im Bereich von 0 bis 1 bezeichnet, x die Datenbanktabelle bezeichnet, y die andere Datenbanktabelle bezeichnet, M einen Randomisierungsalgorithmus bezeichnet, S alle Teilmengen des Bildes von M bezeichnet und e die Eulersche Zahl ist.

## Revendications

1. Procédé de restriction de requêtes destinées à une base de données selon un budget de confidentialité comprenant :

l'attribution d'une première allocation de confidentialité à de premières données dans une table de base de données, la première allocation de confidentialité étant un montant d'une monnaie de confidentialité, et l'attribution d'une deuxième allocation de confidentialité à de secondes données dans la table de base de données, les secondes données étant ajoutées à la table de base de données après que les premières données soient présentes dans la table de base de données, la deuxième allocation de confidentialité étant un montant de la monnaie de confidentialité, et la table de base de données étant partitionnée lors de l'ajout des secondes données en une première partition comportant les premières données et une seconde partition comportant les secondes données de sorte que la première allocation de confidentialité s'applique à la première partition et que la deuxième allocation de confidentialité s'applique à la seconde partition ;
la réception d'une requête en provenance d'un utilisateur de base de données, la requête comprenant un montant spécifié de la monnaie de confidentialité, dans lequel le traitement de la requête nécessite l'accès à au moins une partition sujette, et l'au moins une partition sujette comprend au moins l'une de la première partition ou de la seconde partition ;
la comparaison, pour l'au moins une partition sujette, partition par partition, d'au moins une partie du montant spécifié de monnaie de confidentialité à une allocation de confidentialité restante pour la partition sujette ;
le fait d'interdire le traitement de la requête lorsque la comparaison indique que l'au moins une partie du montant spécifié de monnaie de confidentialité est supérieure à l'allocation de confidentialité restante pour la partition sujette ; et
le fait d'autoriser le traitement de la requête lorsque la comparaison indique que, pour chacune de l'au moins une partition sujette, l'au moins une partie du montant spécifié de monnaie de confidentialité est égale ou inférieure à l'allocation de confidentialité restante pour la partition sujette.

2. Procédé selon la revendication 1, dans lequel la monnaie de confidentialité est ε, dans lequel ε désigne une différence entre les résultats de la requête sur la table de base de données et les résultats de la requête sur une autre table de base de données, dans lequel l'autre table de base de données diffère de la table de base de données par un enregistrement de base de données.

3. Procédé selon la revendication 2, dans lequel ε est tel que l'équation suivante est vérifiée : $\Pr[M(x) \in S] / \Pr[M(y) \in S] \le e^\wedge\varepsilon$, dans lequel Pr désigne une probabilité comprise dans la plage de 0 à 1, x désigne la table de base de données, y désigne l'autre table de base de données, M désigne un algorithme de randomisation, S désigne tous les sous-ensembles de l'image de M, et e est le nombre d'Euler.

4. Procédé selon la revendication 1, dans lequel la monnaie de confidentialité est δ, dans lequel δ désigne la vraisemblance selon laquelle des informations en provenance de la table de base de données peuvent être accidentellement divulguées.

5. Procédé selon la revendication 4, dans lequel δ est tel que l'équation suivante est vérifiée : Pr[M(x) ∈ S] / Pr[M(y) ∈ S] ≤ e^ε + δ, dans lequel ε désigne une différence entre les résultats de la requête sur la table de base de données et les résultats de la requête sur une autre table de base de données, dans lequel l'autre table de base de données diffère de la table de base de données par un enregistrement de base de données, Pr désigne une probabilité comprise dans la plage de 0 à 1, x désigne la table de base de données, y désigne l'autre table de base de données, M désigne un algorithme de randomisation, S désigne tous les sous-ensembles de l'image de M et e est le nombre d'Euler.

6. Procédé selon la revendication 1, comprenant en outre :

l'attribution d'une troisième allocation de confidentialité aux premières données dans la table de base de données, la troisième allocation de confidentialité étant un montant d'une autre monnaie de confidentialité, et l'attribution d'une quatrième allocation de confidentialité aux secondes données dans la table de base de données, la quatrième allocation de confidentialité étant un montant de l'autre monnaie de confidentialité, de sorte que la troisième allocation de confidentialité s'applique à la première partition et que la quatrième allocation de confidentialité s'applique à la seconde partition, et dans lequel

la requête comprend en outre un montant spécifié de l'autre monnaie de confidentialité,

l'étape de comparaison comprend en outre la comparaison, pour l'au moins une partition sujette, partition par partition, d'au moins une partie du montant spécifié de l'autre monnaie de confidentialité à une autre allocation de confidentialité restante pour la partition sujette,

l'étape d'interdiction comprend en outre le fait d'interdire le traitement de la requête lorsque la comparaison indique que l'au moins une partie du montant spécifié de l'autre monnaie de confidentialité est supérieure à l'autre allocation de confidentialité restante pour la partition sujette, et

l'étape d'autorisation comprend le fait d'autoriser le traitement de la requête lorsque la comparaison indique que, pour chacune de l'au moins une partition sujette, l'au moins une partie du montant spécifié de monnaie de confidentialité est égale ou inférieure à l'allocation de confidentialité restante pour la partition sujette et que l'au moins une partie du montant spécifié de l'autre monnaie de confidentialité est égale ou inférieure à l'autre allocation de confidentialité restante pour la partition sujette.

7. Procédé selon la revendication 6,

dans lequel la monnaie de confidentialité est ε,
dans lequel ε désigne une différence entre les résultats de la requête sur la table de base de données et les résultats de la requête sur une autre table de base de données, dans lequel l'autre table de base de données diffère de la table de base de données par un enregistrement de base de données ; et
dans lequel l'autre monnaie de confidentialité est δ, dans lequel δ désigne la vraisemblance selon laquelle des informations en provenance de la table de base de données peuvent être accidentellement divulguées ;
éventuellement dans lequel ε et δ sont tels que l'équation suivante est vérifiée :
Pr[M(x) ∈ S] / Pr[M(y) ∈ S] ≤ e^ε, dans lequel Pr désigne une probabilité comprise dans la plage de 0 à 1, x désigne la table de base de données, y désigne l'autre table de base de données, M désigne un algorithme de randomisation, S désigne tous les sous-ensembles de l'image de M, et e est le nombre d'Euler.

8. Procédé selon l'une des revendications 1 à 7,

dans lequel la table de base de données est accessible via une salle de nettoyage de données,
dans lequel un fournisseur de données dans la salle de nettoyage de données commande l'accès à au moins l'une des premières données ou des secondes données, et spécifie au moins l'une de la première allocation de confidentialité ou de la seconde allocation de confidentialité, et
dans lequel l'utilisateur de base de données est un abonné aux données dans la salle de nettoyage de données qui a été autorisé, par le fournisseur de données, à accéder à au moins l'une des premières données ou des secondes données.

9. Système de traitement comprenant :

une base de données comprenant au moins une table de base de données ; et
un ou plusieurs processeurs destinés à mettre en œuvre un module d'administration de confidentialité pour réaliser
l'attribution d'une première allocation de confidentialité à de premières données dans la table de base de données, la première allocation de confidentialité étant un montant d'une monnaie de confidentialité, et l'attribution d'une deuxième allocation de confidentialité à de secondes données dans la table de base de données, les secondes données étant ajoutées à la table de base de données après que les premières données soient présentes dans la table de base de données, la deuxième allocation de confidentialité étant un montant de la monnaie de confidentialité, et la table de base de données étant partitionnée lors de l'ajout des secondes données en une première partition comportant les premières données et une seconde partition comportant les secondes données de sorte que la première allocation de confidentialité s'applique à la première partition et que la deuxième allocation de confidentialité s'applique à la seconde partition ;

la réception d'une requête en provenance d'un utilisateur de base de données, la requête comprenant un montant spécifié de la monnaie de confidentialité, dans lequel le traitement de la requête nécessite l'accès à au moins une partition sujette, et l'au moins une partition sujette comprend au moins l'une de la première partition ou de la seconde partition ;

la comparaison, pour l'au moins une partition sujette, partition par partition, d'au moins une partie du montant spécifié de monnaie de confidentialité à une allocation de confidentialité restante pour la partition sujette ;

le fait d'interdire le traitement de la requête lorsque la comparaison indique que l'au moins une partie du montant spécifié de monnaie de confidentialité est supérieure à l'allocation de confidentialité restante pour la partition sujette ; et

le fait d'autoriser le traitement de la requête lorsque la comparaison indique que, pour chacune de l'au moins une partition sujette, l'au moins une partie du montant spécifié de monnaie de confidentialité est égale ou inférieure à l'allocation de confidentialité restante pour la partition sujette.

10. Système selon la revendication 9,

dans lequel la base de données et le module d'administration de confidentialité sont inclus dans un seul dispositif ; et/ou dans lequel la première allocation de confidentialité et la deuxième allocation de confidentialité sont fournies par un propriétaire des premières données et des secondes données.

11. Système selon la revendication 9 ou 10,

dans lequel la table de base de données est accessible via une salle de nettoyage de données, dans lequel un fournisseur de données dans la salle de nettoyage de données commande l'accès à au moins l'une des premières données ou des secondes données, et spécifie au moins l'une de la première allocation de confidentialité ou de la seconde allocation de confidentialité, et dans lequel l'utilisateur de base de données est un abonné aux données dans la salle de nettoyage de données qui a été autorisé, par le fournisseur de données, à accéder à au moins l'une des premières données ou des secondes données.

12. Système selon la revendication 9,

dans lequel la monnaie de confidentialité est $\varepsilon$, dans lequel $\varepsilon$ désigne une différence entre les résultats de la requête sur la table de base de données et les résultats de la requête sur une autre table de base de données, dans lequel l'autre table de base de données diffère de la table de base de données par un enregistrement de base de données ;

éventuellement dans lequel $\varepsilon$ est tel que l'équation suivante est vérifiée :

$\Pr[M(x) \in S] / \Pr[M(y) \in S] \leq e^{\wedge}\varepsilon$, dans lequel Pr désigne une probabilité comprise dans la plage de 0 à 1, x désigne la table de base de données, y désigne l'autre table de base de données, M désigne un algorithme de randomisation, S désigne tous les sous-ensembles de l'image de M, et e est le nombre d'Euler.

13. Système selon la revendication 9,

dans lequel la monnaie de confidentialité est $\delta$, dans lequel $\delta$ désigne la vraisemblance selon laquelle des informations en provenance de la table de base de données peuvent être accidentellement divulguées,

éventuellement dans lequel $\delta$ est tel que l'équation suivante est vérifiée :

$\Pr[M(x) \in S] / \Pr[M(y) \in S] \leq e^{\wedge}\varepsilon + \delta$, dans lequel $\varepsilon$ désigne une différence entre les résultats de la requête sur la table de base de données et les résultats de la requête sur une autre table de base de données, dans lequel l'autre table de base de données diffère de la table de base de données par un enregistrement de base de données, Pr désigne une probabilité comprise dans la plage de 0 à 1, x désigne la table de base de données, y désigne l'autre table de base de données, M désigne un algorithme de randomisation, S désigne tous les sous-ensembles de l'image de M et e est le nombre d'Euler.

14. Système selon la revendication 9, dans lequel le module d'administration de confidentialité réalise en outre les étapes suivantes :

l'attribution d'une troisième allocation de confidentialité aux premières données dans la table de base de données, la troisième allocation de confidentialité étant un montant d'une autre monnaie de confidentialité, et l'attribution d'une quatrième allocation de confidentialité aux secondes données dans la table de base de données, la quatrième allocation de confidentialité étant un montant de l'autre monnaie de confidentialité, de sorte que la troisième allocation de confidentialité s'applique à la première partition et que la quatrième allocation de confidentialité s'applique à la seconde partition, et
dans lequel

la requête comprend en outre un montant spécifié de l'autre monnaie de confidentialité,
l'étape de comparaison comprend en outre la comparaison, pour l'au moins une partition sujette, partition par partition, d'au moins une partie du montant spécifié de l'autre monnaie de confidentialité à une autre allocation de confidentialité restante pour la partition sujette,
l'étape d'interdiction comprend en outre le fait d'interdire le traitement de la requête lorsque la comparaison indique que l'au moins une partie du montant spécifié de l'autre monnaie de confidentialité est supérieure à l'autre allocation de confidentialité restante pour la partition sujette, et
l'étape d'autorisation comprend le fait d'autoriser le traitement de la requête lorsque la comparaison indique que, pour chacune de l'au moins une partition sujette, l'au moins une partie du montant spécifié de monnaie de confidentialité est égale ou inférieure à l'allocation de confidentialité restante pour la partition sujette et que l'au moins une partie du montant spécifié de l'autre monnaie de confidentialité est égale ou inférieure à l'autre allocation de confidentialité restante pour la partition sujette.

15. Système selon la revendication 14,

dans lequel la monnaie de confidentialité est $\varepsilon$,
dans lequel $\varepsilon$ désigne une différence entre les résultats de la requête sur la table de base de données et les résultats de la requête sur une autre table de base de données, dans lequel l'autre table de base de données diffère de la table de base de données par un enregistrement de base de données ; et
dans lequel l'autre monnaie de confidentialité est $\delta$, dans lequel $\delta$ désigne la vraisemblance selon laquelle des informations en provenance de la table de base de données peuvent être accidentellement divulguées ;
éventuellement dans lequel $\varepsilon$ et $\delta$ sont tels que l'équation suivante est vérifiée :
$Pr[M(x) \in S] / Pr[M(y) \in S] \leq e^{\wedge}\varepsilon$, dans lequel Pr

désigne une probabilité comprise dans la plage de 0 à 1, x désigne la table de base de données, y désigne l'autre table de base de données, M désigne un algorithme de randomisation, S désigne tous les sous-ensembles de l'image de M, et e est le nombre d'Euler.

**Orders table**
Not Clustered: Not Partitioned

100

| Order_Date | Country | Status |
|---|---|---|
| 2022-08-02 | US | Shipped |
| 2022-08-04 | JP | Shipped |
| 2022-08-05 | UK | Canceled |
| 2022-08-06 | KE | Shipped |
| 2022-08-02 | KE | Canceled |
| 2022-08-05 | US | Processing |
| 2022-08-04 | JP | Processing |
| 2022-08-04 | KE | Shipped |
| 2022-08-06 | UK | Canceled |
| 2022-08-02 | UK | Processing |
| 2022-08-05 | JP | Canceled |
| 2022-08-06 | UK | Processing |
| 2022-08-05 | US | Shipped |
| 2022-08-06 | JP | Processing |
| 2022-08-02 | KE | Shipped |
| 2022-08-04 | US | Shipped |

105-1, 105-2, 105-3, 105-4, 105-5, 105-6, 105-7, 105-8, 105-9, 105-10, 105-11, 105-12, 105-13, 105-14, 105-15, 105-16

110-1  110-2  110-3

**FIG. 1A**

**Orders table**
Clustered by Country: Not Partitioned

100'

| Order_Date | Country | Status |
|---|---|---|
| 2022-08-04 | JP | Shipped |
| 2022-08-04 | JP | Processing |
| 2022-08-05 | JP | Canceled |
| 2022-08-06 | JP | Processing |
| 2022-08-06 | KE | Shipped |
| 2022-08-02 | KE | Canceled |
| 2022-08-04 | KE | Shipped |
| 2022-08-02 | KE | Shipped |
| 2022-08-05 | UK | Processing |
| 2022-08-06 | UK | Canceled |
| 2022-08-02 | UK | Canceled |
| 2022-08-06 | UK | Processing |
| 2022-08-02 | US | Shipped |
| 2022-08-05 | US | Processing |
| 2022-08-05 | US | Shipped |
| 2022-08-04 | US | Shipped |

105-2, 105-7, 105-11, 105-14, 105-4, 105-5, 105-8, 105-15, 105-3, 105-9, 105-10, 105-12, 105-1, 105-6, 105-13, 105-16

110-1  110-2  110-3

**FIG. 1B**

200

Order table
Clustered by Country: Partitioned by Order_Date (Daily)

| | Order_Date ⇳ | Country ⇳ | Status ⇳ | |
|---|---|---|---|---|
| Partition: 2022-08-02 | 2022-08-02 | KE | Shipped | 105-8 |
| | 2022-08-02 | KE | Canceled | 105-15 |
| Clusters: | 2022-08-02 | UK | Processing | 105-10 |
| Country | 2022-08-02 | US | Shipped | 105-1 |

210-1

| | Order_Date | Country | Status | |
|---|---|---|---|---|
| Partition: 2022-08-04 | 2022-08-04 | JP | Shipped | 105-2 |
| | 2022-08-04 | JP | Processing | 105-7 |
| Clusters: | 2022-08-04 | KE | Shipped | 105-8 |
| Country | 2022-08-04 | US | Shipped | 105-16 |

210-2

| | Order_Date | Country | Status | |
|---|---|---|---|---|
| Partition: 2022-08-05 | 2022-08-05 | JP | Canceled | 105-11 |
| | 2022-08-05 | UK | Canceled | 105-3 |
| Clusters: | 2022-08-05 | US | Shipped | 105-13 |
| Country | 2022-08-05 | US | Processing | 105-6 |

210-3

| | Order_Date | Country | Status | |
|---|---|---|---|---|
| Partition: 2022-08-06 | 2022-08-06 | JP | Processing | 105-14 |
| | 2022-08-06 | KE | Shipped | 105-4 |
| Clusters: | 2022-08-06 | UK | Cancelled | 105-9 |
| Country | 2022-08-06 | UK | Processing | 105-12 |

210-4

110-1    110-2    110-3

FIG. 2

305-1

315

310

320-1

FUNCTION

Database X
Without your data

Function output X

FUNCTION

315

Database Y
With your data

Function output Y

305-2

320-2

FIG. 3

400

440 420 450

User
Device

Network

Privacy
Administration

DB

Server

410

430

Privacy Budget
(e.g. ε and/or δ)

460

FIG. 4

Processing System

Processor(s)

505

Memory

510

Instruction(s)

515

Data

520

500

FIG. 5

Start

Assigning a first privacy allowance to first data in a database table, the first privacy allowance being an amount of a privacy currency, and assigning a second privacy allowance to second data in the database table, the second data being added to the database table after the first data is present in the database table, the second privacy allowance being an amount of the privacy currency, and the database table being partitioned upon addition of the second data into a first partition including the first data and a second partition including the second data such that the first privacy allowance applies to the first partition and the second privacy allowance applies to the second partition ⟋610

Receiving a query from a database user, the query including a specified amount of the privacy currency, wherein servicing the query requires access to at least one subject partition, and the at least one subject partition includes at least one of the first partition or the second partition. ⟋620

Comparing, for the at least one subject partition, on a partition-by-partition basis, at least a portion of the specified amount of privacy currency to a remaining privacy allowance for the subject partition. ⟋630

Disallowing processing of the query when the comparing indicates that the at least a portion of the specified amount of privacy currency is greater than the remaining privacy allowance for the subject partition. ⟋640

Allowing processing of the query when the comparing indicates that for each of the at least one subject partition the at least a portion of the specified amount of the privacy currency is equal to or less than the remaining privacy allowance for the subject partition. ⟋650

End

FIG. 6

**EP 4 672 063 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019318121 A1

- US 2021256151 A1

### Non-patent literature cited in the description

- Turbo: Effective Caching in Differentially-Private Databases. **KELLY KOSTOPOULOU et al.** ARXIV.ORG. CORNELL UNIVERSITY LIBRARY, 23 October 2023